Europäisches Patentamt

European Patent Office

Office européen des brevets

(19)

(11) **EP 1 191 459 A1**

(12) **EUROPEAN PATENT APPLICATION**

(43) Date of publication:
**27.03.2002 Bulletin 2002/13**

(51) Int Cl.7: **G06F 17/30**

(21) Application number: **00308303.7**

(22) Date of filing: **22.09.2000**

| | |
|---|---|
| (84) Designated Contracting States:<br>**AT BE CH CY DE DK ES FI FR GB GR IE IT LI LU**<br>**MC NL PT SE**<br>Designated Extension States:<br>**AL LT LV MK RO SI**<br><br>(71) Applicant: **Nightingale Technologies Ltd.**<br>**Gibraltar (GI)** | (72) Inventor: **Rahman, Sabbir Ahmed**<br>**Harrow Weald, Middlesex HA3 7DJ (GB)**<br><br>(74) Representative:<br>**Cross, James Peter Archibald et al**<br>**R.G.C. Jenkins & Co.,**<br>**26 Caxton Street**<br>**London SW1H 0RJ (GB)** |

(54) **Data clustering methods and applications**

(57) A method of clustering data involves several different techniques for hierarchical clustering a set of data samples. The techniques include the selection of clusters in increasing size, ordering of data samples according to absolute distance from a reference, searching for nearest neighbours within a restricted index range, and making distance comparisons by summing the contributions from components in each dimension. A method of classifying data involves calculating a rank value for a test sample taking into account the dissimilarities of the data samples at either end of the closest edge to the data sample by calculating as a function of a test sample dissimilarity of the test sample to the most similar data sample within the cluster.

The applications of the methods include data compression, feature extraction, unmixing, data mining and browsing, network design and pattern recognition.

EP 1 191 459 A1

## Description

### Field of the Invention

The present invention relates in one aspect to a hierarchical data clustering method and to processes and applications including that method. In another aspect, the present invention relates to a method of classifying a test sample relative to one or more clusters. The present invention relates further to processes and applications involving such methods.

### Background of the Invention

Hierarchical cluster analysis involves the classification of a set of data samples into a cluster structure based on the similarity between the samples, without imposing any predefined grouping. There is a large body of literature on methods and applications of cluster analysis, examples of which are:

'Data Clustering: A Review' by Jain A. K., Murty, M. N. and Flynn, P. J., ACM Computing Surveys No. 3, vol. 31, p. 264;
'Classification', by Gordon, A. D., Chapter 3, published Chapman & Hall, 1981.

Single-link cluster analysis is one type of cluster analysis which involves finding the 'minimum spanning tree' of a set of data samples. The 'minimum spanning tree' is a set of lines or 'edges' which join pairs of data samples such that the total length or 'weight' of the edges is a minimum; see for example:

'Introduction to Algorithms', by Cormen, T. E, Leiserson, C. E., and Rivest, R. L., Chapter 24, published MIT Press 1990;
'Algorithms', by Sedgewick, R., Chapter 31, Second edition 1988, published by Addison Wesley.

In practical applications, the usefulness of any cluster analysis technique depends on its efficiency in terms of speed and storage requirements, which will be functions of the number of data samples N, the number of dimensions D of each sample, and the structure of the data samples. In the worst case, hierarchical clustering algorithms have time requirements of the order of $N^2$ and can therefore be impractical for large data sets.
The paper 'An Efficient Interactive Agglomerative Hierarchical Clustering Algorithm for Hyperspectral Image Processing' by the present inventor, published in the Proceedings of the SPIE Conference on Imaging Spectrometry, San Diego, California, July 1998, SPIE Vol. 3438, pp. 210 to 221 describes clustering algorithms which involve indexing data points so that nearby points have nearby indices and searching in a restricted subspace so as to reduce the number of comparisons which need to be made between pairs of points. However, the search is made only in one direction and does not achieve accurate single-link clustering.
European patent publication EP 913 780 A discloses a data clustering method in which the total number of distance calculations is reduced by eliminating data samples unlikely to be nearest to the sample under consideration before selecting the nearest.
The paper 'A Spectral Unmixing Algorithm for Distributed Endmembers with Applications to BioMedical Imaging', Proceedings of SPIE, Vol. 3438, by the inventor of the present invention, discloses a method of calculating a likelihood value of a test point belonging to a set of data points, based on a hierarchical clustering of the data points.

### Summary of the Invention

According to one aspect of the present invention, there is provided a data clustering method including the following steps:

a. Receiving as input a set of data samples;
b. Setting initially each data sample as belonging to its own cluster;
c. Taking each cluster in turn, determining the closest data sample to any sample in that cluster and not already forming part of that cluster;
d. Merging the cluster of the closest data sample with the current cluster; and
e. Repeating steps c and d until a desired degree of clustering has been achieved;

wherein at step c the clusters are taken in order of increasing cluster size.
An advantage of this method is that the number of distance or dissimilarity measurements which need to be calculated is greatly reduced, because there are generally fewer distances between samples in the smallest current cluster and another cluster of larger size than between samples in clusters both of larger size than the current smallest cluster.

According to another aspect of the present invention, there is provided a data clustering method including the following steps:

    a. Receiving as input a set of data samples;
    b. Setting initially each data sample as belonging to its own cluster;
    c. Taking each cluster in turn, determining the closest data sample to any sample in that cluster and not already forming part of that cluster;
    d. Merging the cluster of the closest data sample with the current cluster; and
    e. Repeating steps c and d until a desired degree of clustering has been achieved;

wherein at step c, the closest data sample is determined by searching over a restricted subspace defined by an index range of the data samples indexed according to distance from a reference.

An advantage of this method is that, by indexing the data samples according to distance from a reference, there will be a maximum and minimum index relative to a sample under consideration within which the nearest sample must be contained and the number of samples which need to be compared to the sample under consideration is greatly reduced, without compromising the accuracy of the clustering.

According to another aspect of the present invention, there is provided a data clustering method including the following steps:

    a. Receiving as input a set of data samples each having a plurality of dimensions;
    b. Determining for each of said dimensions a measure of variation of the data samples in that dimension;
    c. Sorting the dimensions of the data samples according to their measures of variation;
    d. Setting initially each data sample as belonging to its own cluster;
    e. Taking each cluster in turn, determining the closest data sample to any sample in that cluster and not already forming part of that cluster;
    f. Merging the cluster of the closest data sample with the current cluster; and
    g. Repeating steps e) and f) until a desired degree of clustering has been achieved;

wherein the measure of variation is the range of a predetermined fraction of the data samples excluding the largest and smallest values in that dimension.

An advantage of this method is that the dimensions which are most likely to be of significance in determining dissimilarities between samples are considered first and it is therefore often unnecessary when making comparisons between samples to consider all of the dimensions.

According to another aspect of the present invention, there is provided a method of classifying a test sample relative to a cluster comprising a plurality of data samples, including the steps of:

    a. determining the most similar data sample of the cluster to the test sample;
    b. calculating a value associated with the test sample and the cluster, dependent on the dissimilarity of the test sample to the most similar data sample and the dissimilarity of the most similar data sample to any other data sample within the cluster; and
    c. performing further processing steps dependent on the calculated value for the cluster;

wherein at step b, the value is calculated as a function of the dissimilarity of the test sample to the most similar data sample and of the dissimilarity of the test sample to another data sample most similar to the most similar data sample within the cluster.

An advantage of this method is that the calculated value is calculated with reference to an edge rather than an individual sample and provides a smoother variation in value in regions intermediate the samples joined by the edge.

According to another aspect of the present invention, there is provided a method of classifying a test sample relative to a cluster comprising at least three data samples, including the steps of:

    a. calculating a value associated with the test sample and the cluster, dependent on the dissimilarity between pairs of data samples within the cluster; and
    b. performing further processing steps dependent on the calculated value for the cluster;

wherein at step a, the value is calculated as a function of a test sample dissimilarity of the test sample to the most similar data sample within the cluster, unless the test sample dissimilarity is less than the dissimilarity of an edge in a minimum spanning tree which has the greatest dissimilarity less than an edge connected to the most similar data sample.

An advantage of this method is that the test sample is given greater weight when close to the shortest edge than when close to the next shortest edge and therefore not as close to the tightest region of the cluster.

**Brief Description of Drawings**

Specific embodiments of the present invention will now be described with reference to the accompanying drawings, in which:

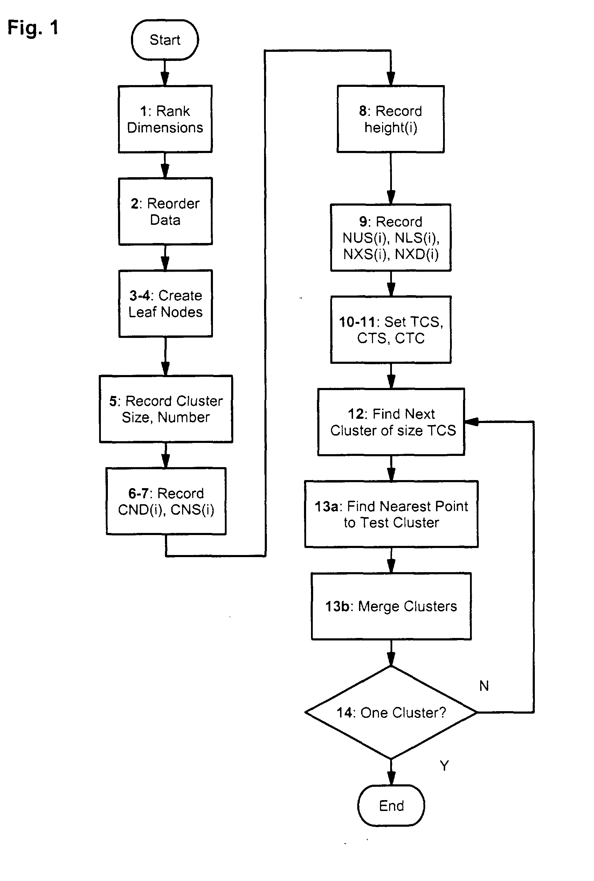

Figure 1 is a flowchart showing the principal steps of a method in an embodiment of the present invention;

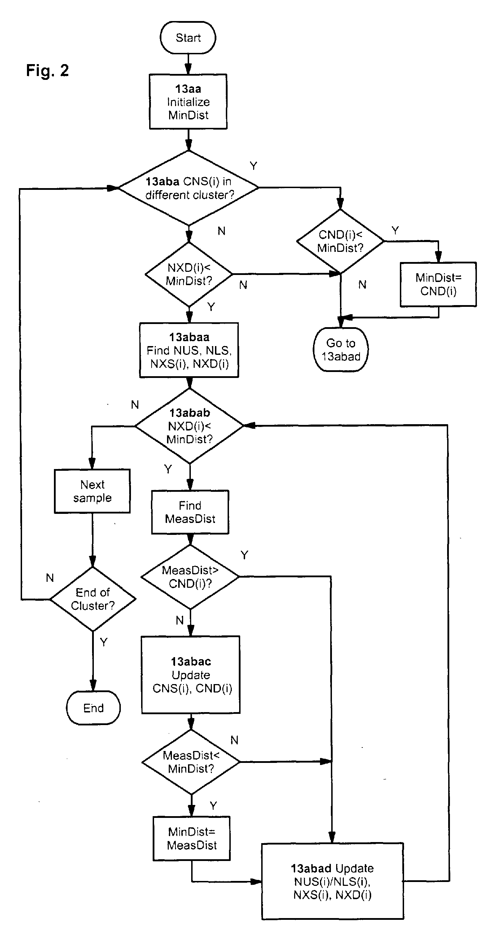

Figure 2 is a flowchart showing the detailed steps of step 13a of the flowchart of Figure 1;
Figure 3 shows the minimum spanning tree of a set of data samples, calculated using the method shown in Figures 1 and 2;
Figure 4 shows a binary tree at an intermediate stage of the calculation of the minimum spanning tree;
Figure 5 shows the binary tree at the final stage of the calculation;
Figure 6 is a generic diagram of apparatus for carrying out the method in a technical process;
Figure 7 shows the binary tree of Figure 5 sorted in order of merge height;
Figure 8 shows the hyperspherical contours of a rank value function for a cluster of the data samples of Figure 3;
Figure 9 shows the hyperspherical contours of a rank value function for a sub-cluster of the data samples of Figure 3;
Figure 10 shows the hyperellipsoidal contours of a rank value function for the sub-cluster of Figure 9; and
Figure 11 is a flow diagram of the calculation of the rank value function.

**Description of Specific Embodiments**

A method according to one embodiment of the invention is described below. An array of N samples each of D dimensions is provided as input.

**Step 1 - Rank Dimensions**

The interquartile range, in other words the range between the first and third quartiles and hence containing the middle 50% of the samples, is calculated for each of the D dimensions. The interquartile range is an advantageous measure in this case, because it is little affected by stray samples at the extremes of the range and therefore gives a good representation of the variation for the majority of the samples. The dimensions of the sample array are reordered in order of decreasing interquartile range, or a ranking order of the dimensions is stored in a dimension rank array.

**Step 2 - Reorder Data Samples**

The data samples are reordered within the array in one of two ways:
2a) Radial Ordering: the samples are reordered in order of increasing distance from an origin, which is selected for example to be the sample with the smallest component in the dimension with the largest interquartile range.
2b) Linear Ordering: the samples are reordered in order of increasing value in a selected dimension (preferably the dimension with the largest interquartile range). In both cases, the original index is stored in a one-dimensional array so as to allow identification of individual samples.

**Step 3 - Create Binary Tree Leaf Nodes**

Each sample is assigned to a corresponding leaf node of a binary tree so that the $i^{th}$ sample after reordering is assigned initially to the $i^{th}$ leaf node of the binary tree, and the assignment is stored in an array.

**Step 4 - Create Cluster Labels**

An array of cluster labels is created indicating the cluster to which each sample belongs. Each sample is initially considered to belong to its own cluster and hence the cluster label is initially the index number of the sample.

**Step 5 - Record Cluster Size and Number**

The size (number of samples) of each cluster and the number of clusters (initially N) is recorded.

**Step 6 - Record Nearest Distance**

The distance from each unmerged sample to the nearest sample in a different cluster is stored as a variable CND(i) (Current Nearest Distance).

**Step 7 - Record Nearest Sample**

The index of the nearest sample is stored as an integer CNS(i) (Current Nearest Sample).

**Step 8 - Record Merge Height**

The distance of each unmerged sample to the cluster to which it is merged is stored as the 'merge height'. Initially, no merging has been done so that the distance is set as infinity (i.e. a maximum value).

**Step 9 - Record Inter-sample and Next Distances**

For each sample, the samples are found having the next highest and lowest leaf node indices not within the same cluster; these will be referred to as the 'next upper' and 'next lower' samples NUS(i), NLS(i) respectively. For example, if the test sample is at leaf node $i$, initially the next upper sample NUS(i) will be at leaf node $i$+1 and the next lower sample NLS(i) at leaf node $i$-1, because each sample initially belongs only to its own cluster.
For each sample and its next upper and lower samples, the 'absolute distance' from the origin is calculated. If radial ordering was used at step 2a), then the 'absolute distance' is the radial distance from the chosen origin. If linear ordering was used at step 2b), then the 'absolute distance' is the distance in the chosen direction from the chosen origin, which is preferably the sample with the smallest component in the chosen direction.
Next, the difference between the absolute distance of the sample and the absolute distance of the next upper sample NUS(i), and the difference between the absolute distance of the sample and the absolute distance of the next lower sample NLS(i) are calculated. The smaller of these two differences is stored as the 'next distance' NXD(i) of the sample and the sample index of the next upper or next lower sample NUS(i), NLS(i) which gave the smaller of the two differences is stored as the 'next sample' NXS(i).

**Step 10 - Set Test Cluster Size**

Test Cluster Size TCS is set initially to 1.

**Step 11 - Set Current Test Sample and Cluster**

The current test sample CTS is set initially to sample index 1, and the current test cluster CTC is the cluster containing that sample (initially cluster 1).

**Step 12 - Find Next Cluster of Test Cluster Size**

The clusters are examined in the order in which they appear in the binary tree to find the next cluster having a size equal to the test cluster size TCS. This is done as follows:

**12a)** If the current cluster size is equal to the test cluster size, then step 12 is complete.
**12b)** Otherwise, jump to the sample at the next leaf node immediately following the current test cluster, which will always be grouped in consecutive leaf nodes in the tree. Make the cluster containing this sample the current test cluster and go to step 12a). If the last leaf node has already been reached, set the test cluster size as the size of the smallest cluster present, as follows:

**12ba)** Increment the current test cluster size and set the 'current minimum test cluster size' to N (i.e. the maximum possible cluster size).
**12bb)** Set the current test sample to be the sample at the first leaf node.
**12bc)** If the size of the current test cluster is the same as the current test cluster size, then go to step 13.

**12bd)** If the size of the current test cluster is less than the current minimum test cluster size, update the current minimum test cluster size and store the current test cluster as the minimum size test cluster.

**12be)** If there are no more samples in the tree after the current test cluster, go to step 12bf). Otherwise, jump to the sample in the tree immediately following the current test cluster, make this the current test sample, and go to step 12bc).

**12bf)** Make the current test cluster the minimum size test cluster.

**Step 13 - Merge with Nearest Sample Not Contained in Cluster**

**13a)** The nearest sample to the current test cluster not itself contained in the test cluster is found as follows:

**13aa)** Set Minimum Distance MinDist as infinity (i.e. a maximum value)

**13ab)** For each sample in the current test cluster, do the following:

**13aba)** If the current nearest sample CNS(i) is not a member of the current test cluster CTC(i), and if the current nearest distance CND(i) is less than the minimum distance MinDist, set the minimum distance MinDist to be the current nearest distance CND(i), store the current sample index as the 'head' and the current nearest sample CNS(i) as the 'tail'.

Otherwise, if the next distance NXD(i) is less than the minimum distance MinDist, update the current nearest sample CNS(i) and current nearest distance CND(i) by resetting the current nearest distance CND(i) to infinity and proceed as follows:

**13abaa)** Find the next sample NXS(i) and the next distance NXD(i) for the current sample as in step 9.

**13abab)** If the next distance NXD(i) is not less than the minimum distance, return to step 13ab) with the next sample in the cluster as the current sample. Otherwise, measure the distance MeasDist from the current sample to the next sample NXS(i). If MeasDist is greater than the nearest distance CND(i), then go to step 13abad). The comparison is performed by measuring the component of the distance in each dimension in the order determined at step 1, squaring the value of that component, and adding the squared value to a sum of squared values. After each summing operation, the sum is compared with the square of the nearest distance CND(i), and if greater, then the operation proceeds to step 13abad) without summing any more terms. This method of performing the comparison avoids unnecessary calculations and gives improved speed, particular if D is large.

**13abac)** If MeasDist is less than the nearest distance CND(i), update the nearest sample CNS(i) and the nearest distance CND(i) to be the next sample NXS(i) and MeasDist respectively. If furthermore MeasDist is less than MinDist, update MinDist to be MeasDist, store the current sample as the 'head' and the next sample NXS(i) as the 'tail'.

**13abad)** Update the next upper or next lower sample NUS(i), NLS(i), according to whether the next sample NXS(i) was the next upper or next lower sample. If the next sample NXS(i) was the next upper sample NUS(i), then update the next upper sample NUS(i) to be the sample with the next higher leaf node index following the current next upper sample NUS(i) not in the test cluster. If the next sample NXS(i) was the next lower sample NLS(i), then update the next lower sample NLS(i) to be the sample with the next lower leaf node index before the current next lower sample NLS(i) not in the current test cluster. Recalculate the next sample NXS(i) and next distance NXD(i) taking into account the new next upper/lower sample NUS(i)/NLS(i); then go to 13abab).

Once the last sample in the current test cluster has been processed, go to step 13b.

**13b)** At this stage the 'head' and 'tail' are the samples to be joined in the minimal spanning tree, and the current test cluster which contains the head is merged with the cluster which contains the tail, with the merge height set to be the minimum distance. The cluster having the higher value label is added to the cluster having the lower value label. This is done as follows:

**13ba)** The leaf positions of samples in the binary tree are rearranged such that the smaller cluster and any samples between the smaller and the larger cluster are swapped in leaf node position so that the smaller and larger clusters become adjacent. The sample indices stored against each leaf node are updated to reflect the swap. The cluster having the higher value label is added to cluster having the lower value label by assigning the lower cluster label to the samples of the higher cluster.

**13bb)** The head and tail sample indices, the minimum distance MinDist (which is equal to the merging height) and the lower cluster label are stored in an array respectively as source(i), dest(i), height(i) and join(i), where *i* is the higher cluster label.

**13bc)** The array element storing the size of the lower cluster is increased by the size of the higher cluster.

**13bd)** The number of clusters is decremented.

### Step 14 - Repeat

If there is only one cluster left, end the procedure; otherwise go to step 12.

The array source(i), dest(i) and height(i) are sufficient to define the minimum spanning tree and binary tree of the samples. Join(i) provides redundant information which nevertheless saves subsequent processing steps.

### Specific Example

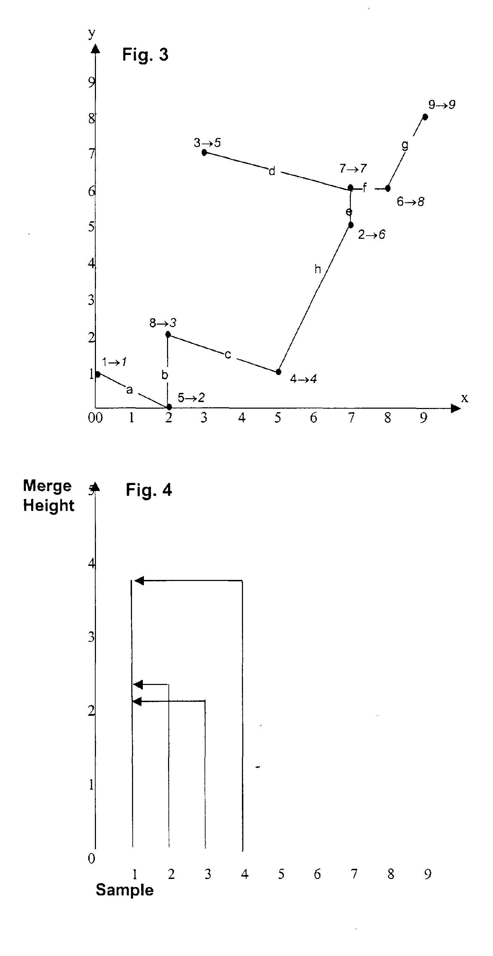

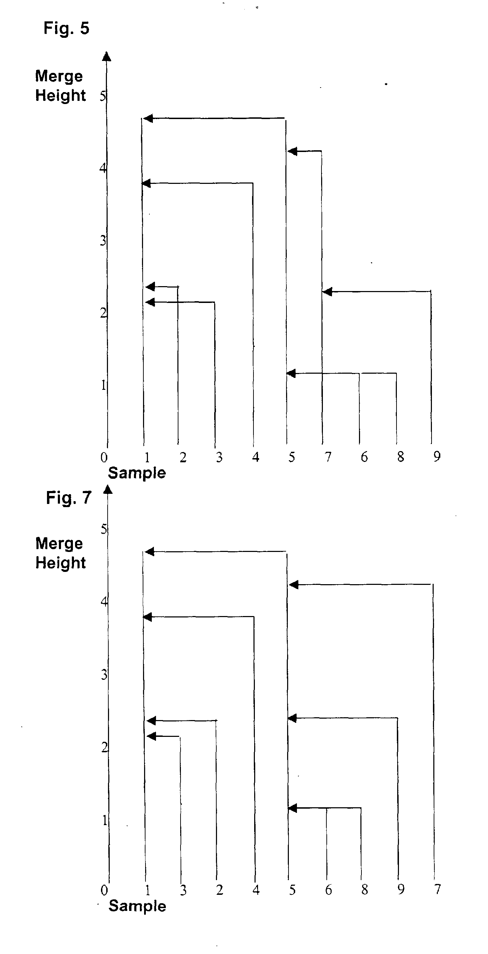

An example of the above method will now be described with reference to Figures 3 to 5, in a simple example where the number of dimensions D is 2 and the number N of data samples or 'patterns' x is 9. Figure 3 shows the values of the data samples as follows:

x(1)= (0,1); x(2)=(7,5); x(3)= (3,7); x(4)=(5,1); x(5)=(2,0); x(6)=(8,6); x(7)=(7, 6); x(8)=(2,2); x(9)=(9,8).

At step 1), there is no need to reorder the dimensions as the interquartile range is the same for both x and y.

At step 2), the radial ordering method of step 2a) is used. The sample (0,1) is chosen as the origin and the samples are reordered (1, 5, 8, 4, 3, 2, 7, 6, 9) and re-indexed in their new order, shown in italics in Figure 3. If the linear ordering method of step 2b) were used and the x dimension chosen, the order would be (1, 5, 8, 3, 4, 2, 7, 6, 9).

In steps 6, 7 and 9, the following values are obtained:

| Sample Index | 1 | 2 | 3 | 4 | 5 | 6 | 7 | 8 | 9 |
|---|---|---|---|---|---|---|---|---|---|
| CND(i) | 2.24 | 2 | 2 | 3.61 | 4.12 | 1 | 1 | 1 | 2.24 |
| CNS(i) | 2 | 3 | 2 | 3 | 7 | 7 | 8 | 7 | 8 |
| NXD(i) | 2.24 | 2 | 2 | 3.61 | 4.47 | 1 | 1 | 1 | 2.24 |
| NXS(i) | 2 | 3 | 2 | 3 | 6 | 7 | 8 | 7 | 8 |

At step 12, sample 1 is selected as the current test sample and the test cluster label is also set to 1. At step 13, sample 2 is joined to sample 1 as shown by edge *a* in Figure 3, and cluster 2 is merged into cluster 1. The following information is recorded:

source(2)=1; dest(2)=2; height(2)=2.24; join(2)=1

Next, sample 3 becomes the current test sample at step 12 as it belongs to the next cluster. At step 13, sample 3 is joined to sample 2 as shown by edge *b* in Figure 3, and cluster 3 is merged into cluster 1. The following information is recorded:

source(3)=3; dest(3)=2; height(3)=2; join(3)=1

Next, sample 4 becomes the current test sample at step 12. At step 13, sample 4 is joined to sample 3 as shown by edge *c* in Figure 3, and cluster 4 is merged into cluster 1. The following information is recorded:

source(4)=4; dest(4)=3; height(4)=3.61; join(4)=1

Next, Sample 5 becomes the current test sample at step 12. At step 13, sample 5 is joined to sample 7, as shown by edge *d* in Figure 3, and cluster 7 is merged into cluster 5. This necessitates a swap in leaf node position between samples 6 and 7 in step 13ba), so that the tree now appears as shown in Figure 3. The following information is recorded:

source(7)=5; dest(7)=7; height(7)=4.12; join(7)=5

Next, sample 6 becomes the current test sample because it is at the next leaf node. Sample 6 is joined to sample 7 as shown by edge *e* in Figure 3 and cluster 6 is merged into cluster 5 (of which sample 7 is already a member). The following information is recorded:

source(6)=6; dest(6)=7; height(6)=1; join(6)=5

Next, sample 8 becomes the current test sample and is joined to sample 7 as shown by edge *f*. Cluster 8 is merged into cluster 5 and the following information is recorded:

source(8)=8; dest(8)=7; height(8)=1; join(8)=5

Next, sample 9 becomes the current test sample and is joined to sample 8 as shown by edge *g*. Cluster 9 is merged into cluster 5 and the following information is recorded:

source(9)=9; dest(9)=8; height(9)=2.24; join(9)=5.

Now, the test cluster size increases to 4 in step 12, as this is the minimum size of cluster present, and cluster 1 is taken as the current test cluster. Samples 1 to 4 are taken in turn, in leaf node order.

With test sample 1, at step 13aba) the nearest sample CNS(1) is sample 2, which is in the same cluster and the method proceeds to step 13abaa). As there is no next lower sample, the next upper sample NUS(i) and the next sample NXS(1) are both sample 5. The next distance NXD(i) = √45, as is the measured distance MeasDist. This is less than MinDist and the nearest distance CND(1), so CND(1) = MinDist = MeasDist and CNS(1)=5. At step 13abad) the next upper sample NUS(i) is incremented to sample 6 and the method returns to step 13abab. The next distance NXD(1) is the difference between the absolute distances of samples 1 and 6, which is √65. This is not less than MinDist, so we return to step 13ab) for the next test sample.

With test sample 2, the nearest sample CNS(2)=3 which is in the same cluster and the method proceeds to step 13abaa). The next distance NXD(2) is the difference between the absolute distances of samples 2 and 5, which is √45-√5. This is less than the minimum distance MinDist, so MeasDist is calculated as the distance to sample 5, which is √50. This is less than CND(2), so CNS(2) = 5 and CND(2) = MeasDist. However, MeasDist is not less than MinDist, so the method proceeds to step 13abad, NXS(2) becomes 6, and the method returns to step 13abab. NXD(2) is calculated as √65-√5. This is less than MinDist, so MeasDist is calculated as √50. This is equal to CND(2) and not less than MinDist, so the method proceeds to step 13abad, NXS(2) becomes 7, and the method returns to step 13abab. NXD(2) is √50- √5. This is less than MinDist, so MeasDist is calculated as √61. This is not less than MinDist or CND(2), so the method proceeds to step 13abad, NXS(3) becomes 8, and the method returns to step 13abab. NXD(2) is √89 - √5. This is not less than MinDist, so the method returns to step 13ab) for the next test sample.

With test sample 3, NXS(3)=5 and NXD(3)=√45-√5. This is less than Mindist, so MeasDist is calculated as √26. This is less than CND(3) and MinDist, so CNS(3)=5, MinDist= CND(3) = MeasDist = √26. At step 13abad, NXS(3) is updated to 6 and NXD(3)=√65 - √5. This is not less than MinDist, so the method returns to step 13ab) for the next test sample.

With test sample 4, CND(4) = √20, which is less than MinDist. Hence, MinDist becomes CND(4), and step 13a) is complete as this is the last test sample in the cluster.

At step 13b), sample 4 is the head and sample 6 is the tail. The corresponding edge is shown as *h* in Figure 3. Cluster 5 is merged into cluster 1 and the following information is recorded:

source(5)=4; dest(5)=6; height(5)=4.47; join(5)=1

As there is only one cluster left, the clustering method halts. The output of the clustering method comprises the array (source(i), dest(i), height(i), join(i)) as follows:

| Index *i* | source(i) | dest(i) | height(i) | join(i) |
|---|---|---|---|---|
| 2 | 1 | 2 | 2.24 | 1 |
| 3 | 3 | 2 | 2 | 1 |
| 4 | 4 | 3 | 3.61 | 1 |
| 5 | 4 | 6 | 4.47 | 1 |
| 6 | 6 | 7 | 1 | 5 |
| 7 | 5 | 7 | 4.12 | 5 |
| 8 | 8 | 7 | 1 | 5 |
| 9 | 9 | 8 | 2.24 | 5 |

**Technical Processes**

The method described above can be applied to any process or application involving a hierarchical clustering algorithm, preferably a single-link algorithm. However, the above method requires considerably fewer operations and therefore can be executed significantly faster, for a given platform, than known single-link clustering methods. The method can be applied to physical data samples, that is samples of physical quantities. The output of the method therefore represents an underlying physical structure of the physical quantities.

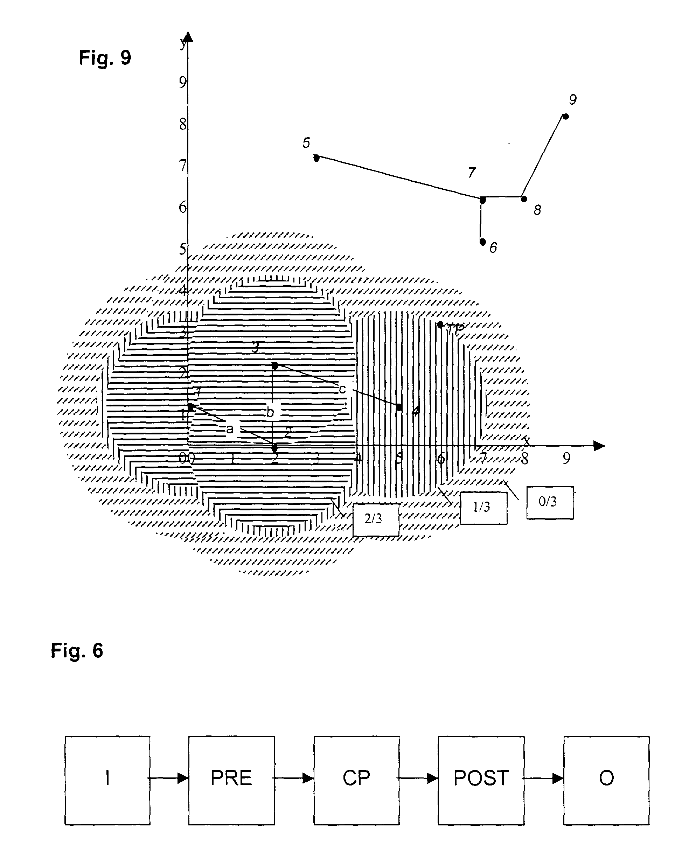

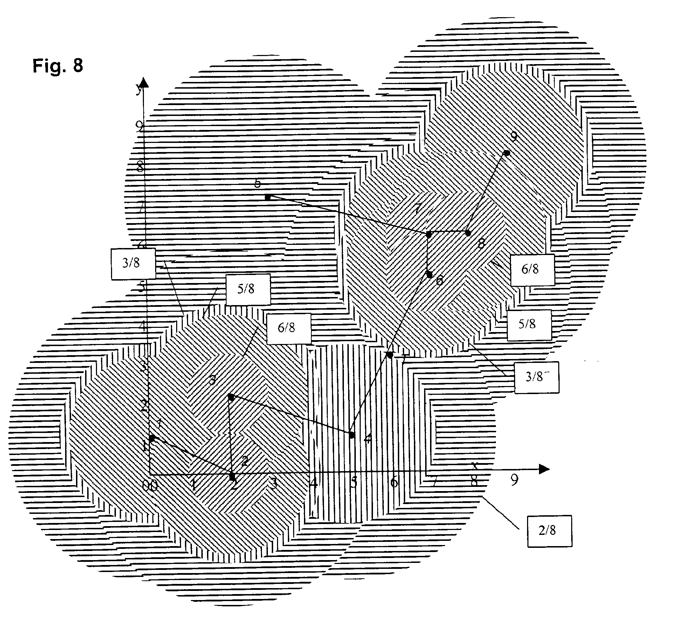

Some of the known applications will be described below, and categorised into generic types of process. Figure 6 shows the general form of apparatus for carrying out these processes, comprising a data input I, a pre-processing stage PRE, a clustering processor CP, a post-processing stage POST and a data output O. These stages do not necessarily represent discrete physical components. The data input I may be a sensor or sensor array, or in the case of non-physical data, a data input device or network of such devices. The input data may be stored on storage means prior to further processing. The pre-processing stage PRE may perform analog-to-digital conversion, if necessary, and may also restrict the dimensions of the data to those required for clustering. The clustering processor CP, which may be one or many physical processors, performs the clustering method and outputs the clustering data. The post-processing stage POST may partition the single hierarchical cluster into multiple clusters for subsequent processing, in accordance with the clustering structure, and may perform automatic classification of the clusters based on their clustering structure and/or the properties of the data samples within the cluster. The data output O may be a display, a printer, or data storage means, for example.

Embodiments of the present invention include a program which performs a method in accordance with the invention when executed by a suitably arranged processor, such as the clustering processor CP. The program may be stored on a carrier, such as a removable or fixed disc, tape or other storage means, or transmitted and received on a carrier such as an electromagnetic signal.

**Compression**

Once a set of data samples has been classified into a hierarchical tree of clusters, the data samples themselves can be replaced by a compressed data set which describes the form of the clusters. In the case of lossy compression, the compressed data set represents the general form of the clusters without specifying the individual data samples. For example, the tree is separated into multiple clusters each having merging heights less than a predetermined value, and the data samples within each cluster are represented in the compressed data set by the coordinates of the centroid of the cluster. In the case of lossless compression, the tree is separated into multiple clusters each having merging heights less than a predetermined value, and individual samples within the cluster are represented by differential vectors from the centroid of the cluster; the differential vectors will have a smaller range than the absolute coordinates of the samples, and may therefore be represented using fewer bits. This technique is applicable to any type of data, whether physical data such as image, audio, video or quantities not directly perceptible by humans, or non-physical data such as economic data. The compressed data set may be stored on a storage medium, giving more efficient storage, or transmitted over a communications link or local bus, giving reduced bandwidth requirements.

Hence, apparatus may be provided for carrying out this process, in which the data output O is a data store or data channel.

**Segmentation and Feature Extraction**

Once a set of data samples has been classified into a hierarchical tree of clusters, the tree may be divided into separate clusters, for example by setting a merge height at which the tree is divided. Each cluster represents a different class of data and may be used for analysis by attributing a different property to each cluster. The membership of each data sample to its cluster may be indicated, for example by colour-coding the samples in a display according to their cluster.

In the field of remote sensing, a similar technique may be used to display different object or terrain types. The display may be interpreted by a user or processed to provide automatic identification, for example by comparison with the shape or spectral properties of known object or terrain types.

A similar technique may be applied in image segmentation, where an image is partitioned into areas of similar colour or shade, for the purpose for example of converting a colour image into a greyscale image or a bitmap image into a vector image. This application is also an example of compression, in that the greyscale or vector image requires fewer bits than the original image.

In some cases, there will be an overlap between the segments of a data sample set, and it is then desirable to estimate the proportion of each segment type present in the overlap area. For example, in an image there may be areas which represent a mixing of two main components of the object of the image, such as trees and grass in a remote sensing image. Pure areas which contain only one component are first identified by finding data samples which are tightly clustered, and the spectral properties of these pure components are determined. Edge detection is then performed to identify the boundaries between these pure areas. In these boundary areas, the proportion of each component is then determined by fitting a mixing model of the spectral properties of the pure areas to the spectral properties of the boundary areas. An example of this technique is described in the paper 'A Spectral Unmixing Algorithm for Distributed Endmembers with Applications to BioMedical Imaging' as referenced above.

If the properties of a data sample in the boundary areas cannot be fitted to within a given tolerance to the mixing model, the data sample is flagged as an anomaly and may be highlighted on a display. Anomaly detection is useful in medical imaging for the detection of small abnormalities, such as tumours, and in remote sensing for the detection of unusual objects or features.

In some specific applications, the boundary between pure samples is determined by the spatial or temporal properties of the samples. However, the boundary may be defined purely with reference to the clustering properties of the samples in their dimension space, so that tight clusters within that space are considered to contain pure samples, and samples between those clusters in the dimension space are considered to be mixed samples.

Hence, in apparatus which carries out this process, the post-processing step POST may generate data flags or labels associated with individual clusters, and the data output O provides an indication of the data flags or labels, such as a false colour or outline display of the data samples.

**Data Mining/Browsing**

In this technique, the cluster structure is used to select for inspection a subset of a large collection of data. In one case, one initial data sample is found and the other members of a cluster to which the initial data sample belongs are selected for inspection. One application of this technique is in the field of document searching and retrieval, such as web searching.

In another case, clusters are selected which have the desired properties, such as tight clustering (e.g. large numbers of samples with low merge heights) and the members of the selected clusters are inspected. One application of this technique is in the field of data mining, in which tight clusters within a large database are selected and analysed so as to make inferences based on the members of the cluster. Alternatively, the desired property may be a very loose clustering, for example in the field of fraud detection where a data sample that is dissimilar to other samples may indicate fraudulent activity.

Where the data samples are non-metric (i.e. they do not take the form of an array of measurement values), a dissimilarity function must be chosen so as to represent numerically the difference between any two data samples. The dissimilarity function may be a function of the number of similar words appearing in two documents, for example.

Hence, in apparatus for carrying out this process, the data input I may be a database and the data output O may be an identification of the selected subset of data, for example on a terminal.

**Network Design**

The minimum spanning tree represents a network connecting each data sample to at least one other sample such that the total edge length or weight is minimized, and therefore represents an optimum solution to real-life problems in which nodes need to be connected together in a network with maximum efficiency. Such problems include circuit design, in which the distance between data samples represents the length of wiring needed to interconnect circuit nodes. Similarly, where the data samples represent communications nodes and the distance between them represents the inefficiency incurred by interconnecting them, the minimum spanning tree represents the most efficient way of interconnecting the nodes. The method for finding the minimum spanning tree according to the above method may be applied to any such real-life problems.

Hence, in the apparatus for carrying out this process, the data input I may provide a data file representing the properties of nodes to be connected, and the data output O may represent a design for interconnecting the nodes. The design may be a graphic representation or a series of instructions to carry out the design. The series of instructions may be carried out automatically so as to create interconnections according to the design.

**Pattern Recognition**

Pattern recognition involves the classification of a new data sample based on its similarity to a set of data samples which have already been classified.

**Cluster Rank Function**

In pattern recognition, it is useful to generate a rank function for a given cluster of data samples. The rank function is a function of the dimensions of the data samples and gives a rank value of a new data sample as a member of the given cluster. The rank value can be used to determine in which cluster a new data sample should be classified.

A method will now be described for generating the rank function for a given cluster, given the data recorded above which defines the minimum spanning tree. The data which defines the minimum spanning tree need not be obtained by the clustering method described above, but this is preferable in view of the speed advantages.

**Preprocessing - Reorder Output in Merge Height Order**

For ease of subsequent processing, the output array is reordered in height order. In the specific example, the reordering is as follows:

| Index $i$ | source(i) | dest(i) | height(i) | join(i) |
|---|---|---|---|---|
| 2 | 6 | 7 | 1 | 5 |
| 3 | 8 | 7 | 1 | 5 |
| 4 | 3 | 2 | 2 | 1 |
| 5 | 1 | 2 | 2.24 | 1 |
| 6 | 9 | 8 | 2.24 | 5 |
| 7 | 4 | 3 | 3.61 | 1 |
| 8 | 5 | 7 | 4.12 | 5 |
| 9 | 4 | 6 | 4.47 | 1 |

The result may be represented as shown in Figure 7, in which the samples are reordered to avoid any of the merge lines crossing.

**Rank Function Contours**

For ease of explanation, the contours of the rank function will now be described with reference to Figure 8, although it is not necessary to calculate the shape of the contours in order to calculate the value of the rank function for a new data sample.

First, hyperspheres (in our example, circles) having a radius equal to the smallest height(i) are drawn around each sample joined at the smallest height. In our example the hyperspheres are drawn around each of samples 6, 7 and 8. The perimeter of the overlapping hyperspheres is assigned a probability of (N-$y$(1)-1)/(N-1), where $y$(1) is the number of edges formed at that height. In this case, the probability is 6/8.

We then proceed to the next smallest merge height of 2, which joins samples 2 and 3. Around those samples, we draw hyperspheres of radius equal to the next smaller merging height (=1), to which the perimeter is also assigned a probability of 6/8. Next, around all of the samples of the current merge height or below, we draw hyperspheres of the current merge height, and assign to their perimeter a probability of (N-$y$(2)-1)/(N-1), where $y$(2) is the number of edges formed at the current merge height or below. In this case, the probability is 5/8.

We then proceed to the next smallest merge height of 2.24, which applies to samples 1, 2, 8 and 9. We draw around them hyperspheres of radius equal to the next smaller merge height (=2), to which a probability of 5/8 is also assigned. Next, around all of the samples of the current merge height or below, we draw hyperspheres of the current merge height and assign to their perimeter a probability of (N-y(3)-1)/(N-1), where y(3) is the number of edges formed at the current merge height or below. In this case, the probability is 3/8.

We then proceed to the next smallest merge height of 3.61, which applies to samples 3 and 4. We draw around them hyperspheres of radius equal to the next smaller merge height (=2.24), to which a probability of 3/8 is also assigned. Next, around all of the samples of the current merge height or below, we draw hyperspheres of the current merge height and assign to their perimeter a probability of (N-y(4)-1)/(N-1), where y(4) is the number of edges formed at the current merge height or below. In this case, the probability is 2/8.

We then proceed to the next smallest merge height of 4.12, which applies to samples 5 and 7. We draw around them hyperspheres of radius equal to the next smaller merge height (=3.61), to which a probability of 2/8 is also assigned. Next, around all of the samples of the current merge height or below, we draw hyperspheres of the current merge height and assign to their perimeter a probability of (N-y(5)-1)/(N-1), where y(5) is the number of edges formed at the current merge height or below. In this case, the probability is 1/8. These circles are not shown in Figure 8, as there is insufficient space.

Finally, we reach the largest merge height of 4.47, which applies to samples 4 and 6. We draw around them hyperspheres of radius equal to the next smaller merge height (=4.12), to which a probability of 1/8 is also assigned. Next, around all of the samples of the current merge height or below, we draw hyperspheres of the current merge height and assign to their perimeter a probability of (N-y(6)-1)/(N-1), where y(6) is the number of edges formed at the current merge height or below. In this case, the probability is 0/8. These circles are not shown in Figure 8, as there is insufficient space.

To calculate the value of the rank function for a test data sample, we interpolate between the perimeters of the circles. Within the circles of smallest radius, we interpolate up to rank function=1 at the centre if the centres are the head and tail of the smallest edge. Otherwise, for the samples of next smallest merge height, the rank function is constant within circles of the smallest radius and set to the value at the boundary.

**Rank Estimation - Spherical Case**

The calculation of the rank value by interpolation will now be described in detail below, in a first order case as described above in which hyperspherical boundaries are defined.

**Step 15 - Find Absolute Distance**

For each sample, the radial or linear 'absolute distance' from the origin is calculated, as in step 2 above.

**Step 16 - Sort Absolute Distances**

The set of absolute distances of the samples is sorted and indexed.

**Step 17 - Calculate Rank Values**

The data samples are classified into one or more clusters. For example, the binary tree may be 'cut' at a specified merging height so that all clusters merged above that merging height are considered to belong to different clusters. Alternatively, the data samples may have been separated *a priori* into groups and clustering performed independently on each group.

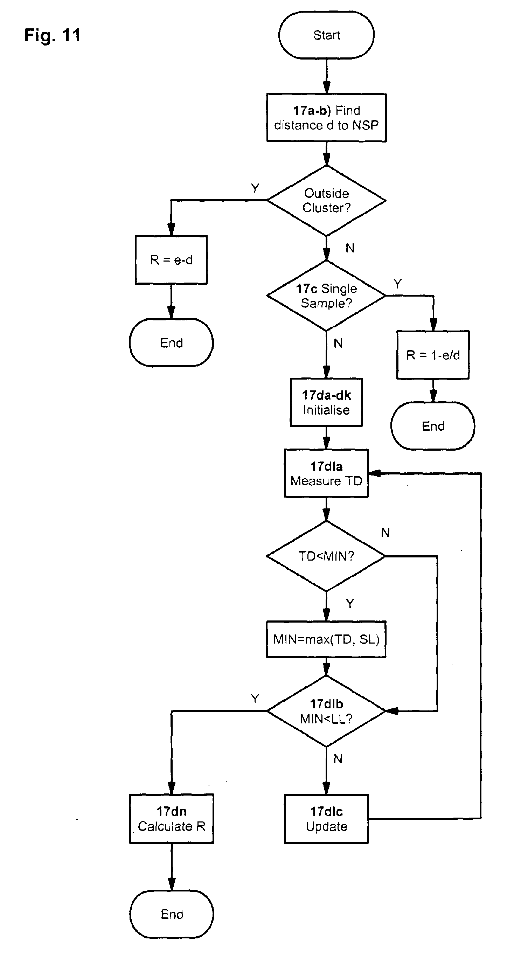

For each cluster, as shown in outline in Figure 11:

**17a)** Find the sample NSP in that cluster nearest to the test sample, using a method similar to step 13a) for finding the nearest neighbour of a sample, but restricting the method to the current cluster and the test sample.

**17b)** Find the distance $d$ from the test sample to the nearest sample NSP in the cluster, and the largest edge length $e$ within the cluster. If the cluster contains only one sample and therefore no edges, make $e = d/2$. If $d > e$, the test sample is determined to lie outside the cluster altogether and the rank value R = $e$-$d$, which will be negative; the method then stops.

**17c)** The test sample lies within the cluster. If the cluster has only a single sample, make R = 1- $d/e$ and stop.

**17d)** The cluster has multiple samples. Do the following steps:

**17da)** Let T be the number of edges in the minimum spanning tree of the cluster.

**17db)** Let CE be the index of the current edge under consideration; the edges are indexed in increasing length. CE is initially set to the first edge of height greater than or equal to the greater of $d$ and ($r$-$d$), where $r$ is the merge height of the NSP.

**17dc)** Let NLE be the index of the first edge longer than the edge CE.

**17dd)** Let NH be the number of edges of length less than the edge CE.

**17de)** Let MIN be the distance from the test sample to the nearest sample considered so far; MIN is set to a maximum value initially.

**17df)** Let SL be the length of the longest edge in the MST shorter than the edge CE; SL is initially set to zero.

**17dg)** Let LL be the length of the current edge CE; LL is initially set to zero.

**17dh)** Let ND be the number of edges in the minimum spanning tree of the cluster with length equal to LL; ND is set initially to 1.

**17di)** Find LL for the current edge CE.

**17dj)** Find ND. Increment CE by ND so that CE is now the index of the shortest edge of length greater than LL.

**17dk)** Define the set of 'active samples' AS as containing initially all samples with merge height less than or equal to SL. The 'active region' AR is defined as the region of all samples within a distance SL of any of the active samples AS.

**17dl)** If LL is less than or equal to the greatest edge length in the minimum spanning tree, find the updated AR and check whether the test sample falls within it as follows:

**17dla)** Add the samples with merge height LL to the active samples AS. For each of the samples with merge height LL, measure the distance TD to the test sample. If TD is less than MIN, set MIN as the greater of TD and SL.

**17dlb)** If MIN is less than or equal to LL, go to step 17dn) to find the rank value, as the test sample lies within the active region.

**17dlc)** Set SL=LL and let LL be the length of the new edge. Add ND to NH, as the number of edges of length less than LL has increased by ND. Set ND to be the number of edges in the minimum spanning tree of length LL. Add ND to CE so that CE is the index of the shortest edge of length greater than LL.

**17dm)** Go back to step 17dl).
**17dn)** The rank value R is given as follows:

$$R = \frac{LL\text{-}MIN}{LL\text{-}SL} \times \frac{ND}{T} + \frac{T\text{-}ND\text{-}NH}{T}$$ (1)

### Rank Estimation - Ellipsoidal Case

The calculation of the rank value by interpolation will now be described in an alternative second-order case in which hyperellipsoidal boundaries are defined. Instead of defining spheroidal boundaries from each sample as shown in Figure 8, ellipsoidal boundaries are defined with the samples at either end of an edge as the foci. Step 17 is replaced by step 17' as follows:

**17a')** Find the sample NSP in that cluster nearest to the test sample, using a method similar to step 13a) for finding the nearest neighbour of a sample, but restricting the method to the current cluster and the test sample.
**17b')** Find the distance $d$ from the test sample to the nearest sample NSP in the cluster, and the largest edge length $e$ within the cluster. If the cluster contains only one sample and therefore no edges, make $e = d/2$. If $d > 1.5 \times e$, the test sample is determined to lie outside the cluster altogether and the rank value is assigned a value as follows:

**17ba')** Using the indexed absolute distances to order and limit the search, find the edge in the minimum spanning tree of the cluster which has the smallest string distance S to the test sample. The two samples connected by the edge can be found from the source(i) and dest(i) arrays. If the smallest current S is $r$, then any edge with a smaller S must have at least one of its samples lying within an absolute distance of 1.5 * $r$ of the test sample; hence, the search is limited to this range. $d$ takes the value of the smallest S, and R=1-e/d. The procedure then stops.

**17c')** The test sample lies within the cluster. If the cluster has only a single sample, make R = 1- $d/e$ and stop.
**17d')** The cluster has multiple samples. Do the following steps:

**17da')** Let T be the number of edges in the minimum spanning tree of the cluster.
**17db')** Let CE be the index of the current edge under consideration; the edges are indexed in increasing length. CE is initially set to the first edge of height greater than or equal to two thirds of the greater of $d$ and ($r$-$d$), where $r$ is the merge height of the NSP.
**17dc')** Let NLE be the index of the first edge longer than the edge CE.
**17dd')** Let NH be the number of edges of length less than the edge CE.
**17de')** Let MIN be the distance from the test sample to the nearest sample considered so far; MIN is set to a maximum value initially.
**17df')** Let SL be the length of the longest edge in the MST shorter than the edge CE.
**17dg')** Let LL be the length of the current edge CE; LL is initially set to zero.
**17dh')** Let ND be the number of edges in the minimum spanning tree of the cluster with length equal to LL; ND is set initially to 1.
**17di')** Find LL for the current edge CE.
**17dj')** Find ND. Increment CE by ND so that CE is now the index of the shortest edge of length greater than LL.
**17dk')** Define the set of 'active edges' AE as having no samples initially. The 'active region' AR is defined as the region of all samples within a 'string distance' S of LL of any edge of AE. The 'string distance' is one half of the difference between the sum SD of the distances from the test sample to each of the samples connected by the edge and the length of the edge:

$$S = (SD\text{-}LL)/2$$

**17dl')** Find the updated AR and check whether the test sample falls within it as follows:

**17dla')** Add the samples with merge height LL to the active samples AS. For each of the samples with merge height LL, measure the string distance S to the test sample. If S is less than MIN, set MIN as the greater of S and SL.
**17dlb')** If MIN is less than or equal to LL, go to step 17dn') to find the rank value, as the test sample lies within the active region.

**17dlc')** Set SL=LL and let LL be the length of the new edge. Add ND to NH, as the number of edges of length less than LL has increased by ND. Set ND to be the number of edges in the minimum spanning tree of length LL. Add ND to CE so that CE is the index of the shortest edge of length greater than LL. If there are no longer edges in the minimum spanning tree, then the test sample lies outside the cluster; so go to 17dn').

**17dm')** Go to 17dl')

**17dn')** The estimated rank value is given by:

$$R = \frac{LL\text{-}MIN}{LL\text{-}SL} \times \frac{ND}{T} + \frac{T\text{-}ND\text{-}NH}{T} \qquad (1')$$

**17do')** The negative estimated rank is given by R= MIN - SL

## Classification

Where there is more than one cluster, the test sample is assigned to the cluster having the greatest estimated rank value.

This process has many practical applications in the general field of artificial intelligence involving automatic recognition of an input, such as an image or sound. For example, in a voice recognition application a series of training samples are input at the data input I during a training phase. It is known *a priori* what sounds or phonemes the training samples are intended to represent, so the samples are divided according to intended classification and each classification of samples is clustered independently. In recognition mode, a rank value is calculated for a test sample in relation to each of the clusters and the test sample is classified according to comparison between these rank values. A 'hard' classification may be made by assigning only one classification to the test sample, or a 'soft' classification may be made by assigning a probability of the test sample belonging to each of a number of different classifications. The 'soft' classifications may be used to classify a series of sounds by determining the relative probabilities of possible sequences of sounds, weighted by the 'soft' classification probability of each sound.

This technique has the advantage that the envelopes of the clusters may partially overlap that of another cluster in dimension space, while still allowing a classification decision to be made.

The technique may be applied to data samples each representing a spatial configuration, for example in the field of optical character recognition (OCR), in which the output is a representation of a recognised character, or robotic vision in which the output is one or more actions performed in response to the classification of the test sample.

Hence, in apparatus for carrying out this process, the data input I is a sensor or sensor array, and the data output O is a representation of the classification of an input, which affects subsequent processing steps by the apparatus.

## Specific Example

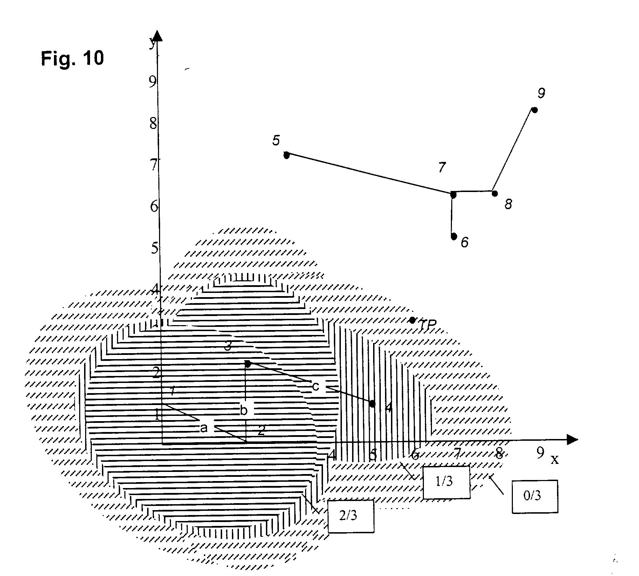

A specific example of estimating the rank value of a test sample will now be described with reference to Figure 9. The single cluster of Figure 8 is divided into two clusters by removing the longest edge between samples 4 and 6; this can be represented as cutting the binary tree at a height between 4.12 and 4.47. A test sample TP is given at coordinates (6,3) and it is desired to find the rank value of the test sample for each cluster, for the purpose of determining to which of the two clusters the test sample should belong. The rank contours are now as shown in Figure 9. By way of comparison, the rank contours for the ellipsoidal case are as shown in Figure 10.

Following the hyperspheroidal case as described above, we take each cluster in turn. In the cluster of samples (1, 2, 3, 4), the closest sample to the test sample is sample 4, for which $d$ is $\sqrt{5}$. e is $\sqrt{10}$, so TP lies within this cluster. There are 3 edges, in increasing length: b, a, c. CE initially points to edge a, since this has a length equal to d, and LL=$\sqrt{5}$. Samples 1, 2 and 3 are added to the active samples. Sample 3 is closer to TP, so MIN becomes $\sqrt{17}$. This is greater than LL, so we find the next longer edge, which is edge a, of length $\sqrt{5}$. Now we return to step 17dl) and add sample 1 to the active samples. However, sample 1 is further from TP than the samples already tested, so MIN is still $\sqrt{17}$, which is greater than LL. We therefore find the next longer edge, which is edge c. Sample 4 is added to the active samples, and LL = $\sqrt{10}$, while SL = $\sqrt{5}$. MIN becomes $\sqrt{5}$, which is less than LL; hence, we calculate:

$$R = \frac{\sqrt{10}\text{-}\sqrt{5}}{\sqrt{10}\text{-}\sqrt{5}} \times \frac{1}{3} + \frac{3\text{-}1\text{-}2}{3} = \frac{1}{3} \qquad (2)$$

as can be confirmed by observing that TP lies on the R=1/3 boundary.

Although the above embodiments have been described with reference to a Euclidean metric, it will be appreciated that other types of metric may alternatively be used. Moreover, aspects of the present invention may be applied to non-metric data samples, and to clustering methods other than single-link clustering.

**Claims**

1. A hierarchical data clustering method, including the following steps:

   a. receiving as input a set of data samples;
   b. recording an initial cluster allocation of said data samples;
   c. for each cluster of said data samples, determining the most similar cluster to that cluster and recording the dissimilarity thereto, according to a predefined dissimilarity function;
   d. recording the identities of the data samples from which the dissimilarity was determined;
   e. recording the most similar cluster and the current cluster as a single cluster;
   f. repeating steps c to e until a predetermined degree of clustering is reached; and
   g. providing as output the recorded dissimilarities and associated data sample identities;

   wherein at step c, the clusters are taken in order of increasing size.

2. A method according to claim 1, wherein at step c, the cluster having the most similar data sample relative to any of the data samples within the current cluster is determined as the most similar cluster.

3. A hierarchical data clustering method, including the following steps:

   a. receiving as input a set of data samples;
   b. indexing said set of data samples substantially in order of absolute distance from a common reference, according to a predefined absolute distance metric;
   c. recording an initial cluster allocation of said data samples;
   d. for each cluster of said data samples, determining the closest cluster to the current cluster and recording the distance thereto, according to a predefined intersample distance metric;
   e. recording the identities of the data samples from which the distance was determined;
   f. recording the closest cluster and the current cluster as a single cluster;
   g. repeating steps d to f until a predetermined degree of clustering is reached; and
   h. providing as output the recorded distances and data sample identities;

   wherein step d includes selecting for distance comparison with each data sample within the current cluster only a subset of the data samples outside the current cluster within an index range between a higher index having an index value higher than that of the current data sample and a lower index having an index value lower than that of the current data sample.

4. A method according to claim 3, wherein step f includes, if the data samples of the closest cluster and the current cluster are not adjacent in index, reindexing at least some of the data samples so that the data samples of the closest cluster and the current cluster are adjacent.

5. A method according to claim 3 or claim 4, wherein the higher and lower indices are determined such that the smaller of the difference between the absolute distance of the data sample of the lower index and that of the current data sample, and the difference between the absolute distance of the data sample of the higher index and that of the current data sample, is greater than the minimum intersample distance between the current data sample and any of the data samples within the index range and not in the current test cluster.

6. A method according to claim 5, wherein the higher and lower indices are determined by successively reducing the lower index or increasing the higher index according to whether the difference between the absolute distance of the data sample of the lower index and that of the current data sample is respectively less than or greater than the difference between the absolute distance of the data sample of the higher index and that of the current data sample, until the smaller of the differences is greater than the minimum intersample distance between the current data sample and any of the data samples within the index range and not in the current test cluster.

**7.** A method according to any one of claims 3 to 6, wherein the absolute distance metric is the difference in component in the dimension of the data samples having the greatest variation.

**8.** A method according to claim 7, wherein the variation is determined as the range within which a predetermined fraction of the data samples fall.

**9.** A hierarchical data clustering method including the following steps:

    a. receiving as input a set of data samples each having a plurality of dimensions;
    b. determining for each of said dimensions a measure of variation of the data samples in that dimension;
    c. sorting the dimensions of the data samples according to their measures of variation;
    d. setting initially each data sample as belonging to its own cluster;
    e. taking each cluster in turn, determining the closest data sample to any sample in that cluster and not already forming part of that cluster;
    f. merging the cluster of the closest data sample with the current cluster; and
    g. repeating steps e) and f) until a desired degree of clustering has been achieved;

wherein the measure of variation is the range of a predetermined fraction of the data samples excluding the largest and smallest values in that dimension.

**10.** A hierarchical data clustering method, including the following steps:

    a. receiving as input a set of data samples;
    b. recording an initial cluster allocation of said data samples;
    c. for each cluster of said data samples, determining the most similar cluster to the current cluster and recording the dissimilarity thereof, according to a predefined dissimilarity function of a plurality of dimensions of the data samples;
    d. recording the identities of the data samples from which the dissimilarity was determined;
    e. recording the most similar cluster and the current cluster as a single cluster;
    f. repeating steps c to e until a predetermined degree of clustering is reached; and
    g. providing as output the recorded dissimilarities and associated data sample identities;

wherein step c includes, for each dissimilarity calculation, taking the component of the distance measurement in each dimension in order of decreasing variation of data samples within each dimension, calculating a cumulative dissimilarity value, and terminating the dissimilarity calculation if the cumulative dissimilarity value exceeds a comparative dissimilarity value.

**11.** A data compression method, including:

    a. performing a method according to any preceding claim;
    b. generating a compressed data set based on the set of data samples and the output of the method of step a; and
    c. outputting said compressed data set.

**12.** A method according to claim 11, including storing said compressed data set.

**13.** A method according to claim 11, including transmitting said compressed data set.

**14.** A feature extraction method, including:

    a. performing as method according to any of claims 1 to 10; and
    b. indicating associations between ones of said data samples within the same cluster on the basis of the output of the method of step a.

**15.** A method according to claim 14, wherein step b includes comparing properties of at least one of the data samples with predetermined classification data according to the clustering properties of the at least one data samples, and outputting a classification indication of the data samples within the same cluster of the basis of the comparison.

**16.** An unmixing method, including:

a. performing a method according to any one of claims 1 to 10;
b. determining at least two characteristic properties of ones of said data samples on the basis of the clustering properties of said data samples determined by step a; and
c. determining a mixing proportion of the characteristic properties for at least one of the data samples.

**17.** A method according to claim 16, including determining at least one boundary region between ones of the data samples having one of the characteristic properties;
wherein in step c, the at least one data samples are within the boundary region.

**18.** A method according to claim 16, wherein the boundary region is determined by spatial or temporal edge detection.

**19.** A method according to claim 17 or 18, including indicating as an anomaly any of the data samples within the boundary region of which the value is determined not to consist of a mixing proportion of the characteristic properties.

**20.** A method of data selection, including:

a. performing as method according to any of claims 1 to 10; and
b. selecting for further processing a subset of said data samples on the basis of their clustering properties as determined at step a.

**21.** A method according to claim 20, wherein said subset is selected to comprise a cluster in accordance with predefined clustering criteria within said cluster.

**22.** A method according to claim 20, wherein said subset is selected to comprise cluster in accordance with predefined clustering criteria relative to other clusters.

**23.** A method according to claim 20, including pre-selecting at least one of said data samples, wherein the subset is selected to comprise a cluster including the or each pre-selected data sample.

**24.** A method according to claim 20, including pre-selecting at least one of said data samples, wherein the subset is selected to comprise a cluster excluding the or each pre-selected data sample.

**25.** A method of generating a network design, including the steps of:

a. performing a method as claimed in any one of claims 1 to 10, wherein the data samples represent nodes of a network; and
b. generating a representation of interconnections between the nodes of the network in accordance with a minimum spanning tree defined by the output of step a.

**26.** A method of network construction, including the steps of:

a. performing a method as claimed in any one of claims 1 to 10, wherein the data samples represent nodes of a network; and
b. creating interconnections between the nodes in accordance with a minimum spanning tree defined by the output of step a.

**27.** A method of classifying a test sample relative to a cluster comprising a plurality of data samples, including the steps of:

a. determining the most similar data sample of the cluster to the test sample;
b. calculating a value associated with the test sample and the cluster, dependent on the dissimilarity of the test sample to the most similar data sample and the dissimilarity of the most similar data sample to any other data sample within the cluster; and
c. performing further processing steps dependent on the calculated value for the cluster;

wherein at step b, the value is calculated as a function of the dissimilarity of the test sample to the most similar data sample and of the dissimilarity of the test sample to another data sample most similar to the most similar data sample within the cluster.

28. A method of classifying a test sample relative to a cluster comprising at least three data samples, including the steps of:

   a. calculating a value associated with the test sample and the cluster, dependent on the dissimilarity between pairs of data samples within the cluster; and
   b. performing further processing steps dependent on the calculated value for the cluster;

   wherein at step a, the value is calculated as a function of a test sample dissimilarity of the test sample to the most similar data sample within the cluster, unless the test sample dissimilarity is less than the dissimilarity of an edge in a minimum spanning tree which has the greatest dissimilarity less than an edge connected to the most similar data sample.

29. A method of according to claim 27 or 28, including calculating a value associated with the test sample relative to each of one or more further clusters;
   wherein said further processing steps are performed on the basis of a comparison between the values calculated for each of the clusters.

30. A pattern recognition method, including:

   a. receiving a test sample; and
   b. performing a method according to any one of claims 27 to 29.

31. A pattern recognition method, including:

   a. receiving a test sample;
   b. performing a method according to any one of claims 1 to 10; and
   c. performing a method according to any one of claims 27 to 29.

32. A method according to any preceding claim, wherein the data samples are samples of physical properties.

33. A computer program arranged to perform a method according to any preceding claim when executed by a suitably arranged processor.

34. A carrier carrying a computer program according to claim 33.

35. Apparatus arranged to perform a method according to any one of claims 1 to 32.

36. Apparatus comprising a data input, a pre-processing stage, a cluster processor arranged to perform a method according to any of claims 1 to 10, a post-processing stage and a data output.

**Fig. 1**

```
                    ┌─────────┐
                    │  Start  │
                    └─────────┘
                         │
                         ▼
              ┌──────────────────┐              ┌──────────────────┐
              │ 1: Rank          │              │ 8: Record        │
              │ Dimensions       │              │ height(i)        │
              └──────────────────┘              └──────────────────┘
                         │                                │
                         ▼                                ▼
              ┌──────────────────┐              ┌──────────────────┐
              │ 2: Reorder       │              │ 9: Record        │
              │ Data             │              │ NUS(i), NLS(i),  │
              └──────────────────┘              │ NXS(i), NXD(i)   │
                         │                      └──────────────────┘
                         ▼                                │
              ┌──────────────────┐                        ▼
              │ 3-4: Create      │              ┌──────────────────┐
              │ Leaf Nodes       │              │ 10-11: Set TCS,  │
              └──────────────────┘              │ CTS, CTC         │
                         │                      └──────────────────┘
                         ▼                                │
              ┌──────────────────┐                        ▼
              │ 5: Record Cluster│              ┌──────────────────┐
              │ Size, Number     │              │ 12: Find Next    │◄──┐
              └──────────────────┘              │ Cluster of size  │   │
                         │                      │ TCS              │   │
                         ▼                      └──────────────────┘   │
              ┌──────────────────┐                        │           │
              │ 6-7: Record      │                        ▼           │
              │ CND(i), CNS(i)   │              ┌──────────────────┐   │
              └──────────────────┘              │ 13a: Find Nearest│   │
                         │                      │ Point to Test    │   │
                         └──────────────────►   │ Cluster          │   │
                                                └──────────────────┘   │
                                                         │             │
                                                         ▼             │
                                                ┌──────────────────┐   │
                                                │ 13b: Merge       │   │
                                                │ Clusters         │   │
                                                └──────────────────┘   │
                                                         │             │
                                                         ▼         N   │
                                                   ╱────────────╲──────┘
                                                  │ 14: One      │
                                                  │ Cluster?     │
                                                   ╲────────────╱
                                                         │ Y
                                                         ▼
                                                    ┌─────────┐
                                                    │   End   │
                                                    └─────────┘
```

EP 1 191 459 A1

**Fig. 2**

**Fig. 3**

**Merge Height**    **Fig. 4**

**Sample**

Fig. 5

Fig. 7

**Fig. 9**

**Fig. 6**

**Fig. 8**

**Fig. 10**

**Fig. 11**

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>A | US 6 012 058 A (BRADLEY PAUL S ET AL)<br>4 January 2000 (2000-01-04)<br><br>* abstract *<br>* column 2, line 29 - column 3, line 63 *<br>* column 6, line 6 - column 6, line 63 *<br>* column 9, line 58 - column 12, line 27 *<br>* claims *<br>--- | 1-3,27,<br>32-36<br>4-10,28,<br>29 | G06F17/30 |
| X<br>A | US 5 787 420 A (PEDERSEN JAN O ET AL)<br>28 July 1998 (1998-07-28)<br><br>* the whole document *<br>--- | 1,2,27,<br>32-36<br>3-10,28,<br>29 | |
| D,A | JAIN A K ET AL: "Data clustering: a review"<br>ACM COMPUTING SURVEYS, SEPT. 1999, ACM, USA,<br>vol. 31, no. 3, pages 264-323,<br>XP002165131<br>ISSN: 0360-0300<br>* the whole document *<br>--- | 1-10,<br>27-29,<br>32-36 | TECHNICAL FIELDS SEARCHED (Int.Cl.7)<br><br>G06F |
| A | US 6 003 029 A (GEHRKE JOHANNES ERNST ET AL) 14 December 1999 (1999-12-14)<br><br>* the whole document *<br>--- | 1-10,<br>27-29,<br>32-36 | |
| A | EP 0 357 010 A (DU PONT)<br>7 March 1990 (1990-03-07)<br><br>* abstract *<br>* column 3, line 48 - column 5, line 51 *<br>----- | 1-3,<br>27-29,<br>32-36 | |

The present search report has been drawn up for all claims

| Place of search | Date of completion of the search | Examiner |
|---|---|---|
| THE HAGUE | 10 April 2001 | Abbing, R |

EP 1 191 459 A1

European Patent
Office

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-10, 27-29, 32-36

**European Patent Office**

**LACK OF UNITY OF INVENTION**
**SHEET B**

Application Number

EP 00 30 8303

The Search Division considers that the present European patent application does not comply with the requirements of unity of invention and relates to several inventions or groups of inventions, namely:

1. Claims: 1-10,27-29,32-36

      A method of hierarchically clustering and classifying data

2. Claims: 11-13

      A data compression method

3. Claims: 14,15

      A method of extracting features from data

4. Claims: 16-19

      A method of unmixing data

5. Claims: 20-24

      A method of selecting sets of data

6. Claim : 25

      A method of generating a network design

7. Claim : 26

      A method of constructing a network

8. Claims: 30,31

      A pattern recognition method

## ANNEX TO THE EUROPEAN SEARCH REPORT
## ON EUROPEAN PATENT APPLICATION NO.

EP 00 30 8303

This annex lists the patent family members relating to the patent documents cited in the above-mentioned European search report.
The members are as contained in the European Patent Office EDP file on
The European Patent Office is in no way liable for these particulars which are merely given for the purpose of information.

10-04-2001

| Patent document cited in search report | | Publication date | Patent family member(s) | | Publication date |
|---|---|---|---|---|---|
| US 6012058 | A | 04-01-2000 | NONE | | |
| US 5787420 | A | 28-07-1998 | NONE | | |
| US 6003029 | A | 14-12-1999 | NONE | | |
| EP 0357010 | A | 07-03-1990 | US | 4885697 A | 05-12-1989 |
| | | | AT | 145075 T | 15-11-1996 |
| | | | AU | 613236 B | 25-07-1991 |
| | | | AU | 4097289 A | 08-03-1990 |
| | | | CA | 1329850 A | 24-05-1994 |
| | | | DE | 68927428 D | 12-12-1996 |
| | | | DE | 68927428 T | 06-03-1997 |
| | | | DK | 431889 A | 02-03-1990 |
| | | | GR | 3022266 T | 30-04-1997 |
| | | | JP | 2269951 A | 05-11-1990 |
| | | | JP | 2719561 B | 25-02-1998 |
| | | | MX | 165640 B | 25-11-1992 |

EPO FORM P0459

For more details about this annex : see Official Journal of the European Patent Office, No. 12/82